# EUROPÄISCHE PATENTSCHRIFT

(11) **EP 3 419 080 B1**
(45) Veröffentlichungstag und Bekanntmachung des Hinweises auf die Patenterteilung: **14.10.2020**
(21) Anmeldenummer: 17176644.7
(22) Anmeldetag: 19.06.2017
(51) Int. Cl.: H01M 2/10, B60K 1/04

(54) **BATTERIETRÄGERRAHMEN UND VERFAHREN ZU DESSEN HERSTELLUNG**
BATTERY SUPPORT ELEMENT AND THE METHOD OF FABRICATING THE SAID
CADRE DU SUPPORT POUR UNE BATTERIE ET SON PROCÉDÉ DE FABRICATION

(43) Veröffentlichungstag der Anmeldung: 26.12.2018
(73) Patentinhaber: DURA Operating, LLC, Auburn Hills, MI 48326 (US)
(72) Erfinder: Rau, Holger, 51580 Reichshof (DE); Schulte, Christian, 57368 Lennestadt (DE); Ruech, Carsten, 56322 Spay (DE)
(74) Vertreter: btb IP Bungartz Baltzer Partnerschaft mbB Patentanwälte

(56) Entgegenhaltungen:
- JP-A- 2015 097 170
- JP-A- 2016 097 851
- US-A1- 2015 295 213

## Beschreibung

Die Erfindung betrifft einen Tragrahmen für eine Elektrofahrzeugbatterie, insbesondere für elektrisch betriebene Personenkraftwagen.

Der Begriff "Batterie" wird im Rahmen dieser Anmeldung als Synonym für die Gesamtheit eines in einem Tragrahmen aufgenommenen elektrischen Energiespeichers verwendet und umfasst daher selbstverständlich auch Akkumulatoren sowie eine Anordnung mehrerer Einzelzellen. Der Begriff "Elektrofahrzeug" umfasst insbesondere einen elektromotorisch betriebenen Personenkraftwagen und betrifft sowohl vollelektrisch betriebene Automobile als auch solche, die hybridisch betrieben werden, also über einen Antrieb verfügen, bei dem Elektromotor und Verbrennungsmotor je nach Antriebskonzept und Betriebszustand gemeinsam oder alleine für die Bereitstellung der Antriebsenergie verwendet werden.

Elektrofahrzeuge mit vollelektrischem oder zumindest teilelektrischen bzw. hybridischen Antrieb erfordern - je nach Antriebskonzept - die Unterbringung von Batterien mit bis zu mehreren hundert Kilogramm Gewicht. Bei der Unterbringung der Batterien im Fahrzeug sind einige Aspekte zu beachten.

Die Batterien sollten in einer nach außen dichten Tragstruktur angeordnet sein, so dass eine Leckage einer Batterie nicht dazu führt, dass aus der Batterie austretende Flüssigkeit in die Umwelt gelangen kann. Fertigungstechnisch stellt dies die Herausforderung dar, dass die Tragstruktur eine zumindest nach unten dichte Wanne bilden sollte, die ein schwerkraftbedingtes Auslaufen von Flüssigkeiten in einem Schadenfall (Batteriegehäusedefekt, Unfall, etc.) verhindert. Auch sollte die Tragstruktur von außen nach innen dicht sein, etwa um zu verhindern, dass von außen Feuchtigkeit und/oder Schmutz in das Innere des Batterieträgerrahmens eindringen, was wiederum die Gefahr von Kurzschlüssen oder sonstigen Funktionsbeeinträchtigungen erhöhen könnte.

Aufgrund der Größe der Batterien moderner Elektrofahrzeuge übernehmen die für die Batterien verwendeten Tragstrukturen zunehmend auch strukturelle Aufgaben innerhalb der Kraftfahrzeugkarosserie. Daher sollte eine Konstruktion einer die Batterie aufnehmenden Tragstruktur nicht nur die im Fahrbetrieb auftretenden Kräfte und das Zusammenspiel der Tragstruktur mit der weiteren Karosserie sondern insbesondere auch die in einem Crashfall auftretenden Lasten berücksichtigen.

Beide vorgenannten Anforderungen bedingen, dass die Verbindung der Strukturbauteile, mit denen die die Batterie aufnehmende Tragstruktur aufgebaut ist, hinreichend dicht und stabil sein muss. Die für die Fertigung der Tragstruktur bevorzugt verwendeten Metallprofile weisen allerdings - nicht zuletzt aufgrund von verwendeten Profillängen von teilweise deutlich mehr als einem Meter - an den bevorzugt stoffschlüssig zu fügenden Verbindungsstellen (typischer Weise im Eckbereich eines Rahmens) Maßabweichungen, insbesondere Verdrehungen auf, die zu Spalten oder einem Versatz der zu verbindenden Bauteile in einer Größenordnung führen, die kann insbesondere bei automatisierten Schweißprozessen, aber auch bei Klebungen und sonstigen stoffschlüssigen Verbindungstechniken, zu Problemen hinsichtlich Festigkeit und Dichtheit der Verbindung sowie der Prozessführung und Automation führen.

Die Druckschriften JP 2015-97170 A und JP 2016-97851 A offenbaren Batterieträgerrahmen für Kraftfahrzeuge und Verfahren zu deren Herstellung, sind aber hinsichtlich verschiedener der vorstehend genannten Aspekte weiter verbesserungswürdig.

Es ist Aufgabe der Erfindung, einen Tragrahmen für eine Elektrofahrzeugbatterie zur Verfügung zu stellen, der hinsichtlich Dichtheit, der Kompensation von Bauteiltoleranzen und der Lastaufnahme insbesondere im Crashfall optimiert ist und sich gut automatisiert schweißen lässt. Es ist außerdem Aufgabe der Erfindung, ein Verfahren zur Herstellung eines solchen Tragrahmens bereitzustellen.

Die Aufgabe wird durch einen Batterietragrahmen nach Anspruch 1 sowie durch ein Verfahren zur Herstellung eines solchen Batterietragrahmens nach Ansprüchen 13 oder 14 gelöst.

Danach ist ein Batterietragrahmen für ein Elektrofahrzeug vorgesehen mit einem Längsprofil und mit einem Querprofil, wobei der Tragrahmen eine einen Innenwinkel bildende Tragrahmenecke aufweist. Zwischen Längsprofil und Querprofil ist als Toleranzkompensation ein Eckelement angeordnet, über das Längsprofil und Querprofil miteinander verbunden sind. Das Eckelement kann insbesondere als ein den Innenwinkel des Tragrahmens überbrückendes Eckprofil ausgebildet sein. Dabei ist entweder
- das Längsprofil oder das Querprofil in einer nicht der Sollanlage entsprechenden Istanlage mit dem Eckelement verbunden, wobei die zur Verbindung des Eckelements mit dem jeweils anderen Profil bestimmte Verbindungsfläche des Eckelements der Sollausrichtung entsprechend ausgerichtet ist,
   oder
- das Längsprofil oder das Querprofil in der Sollanlage mit dem Eckelement verbunden, wobei die zur Verbindung des Eckelements mit dem jeweils anderen Profil vorgesehene Verbindungsfläche unter Beseitigung einer Fehlstellung dieser Verbindungsfläche nachbearbeitet ist.

Zur Herstellung eines solchen Batterietragrahmens sind die Verfahrensschritte vorgesehen:
- Ansetzen entweder des Längsprofils oder des Querprofils an das in Bezug auf die Sollposition vorausgerichtete Eckelement unter Ausgleich einer in Relation zum Eckelement bestehenden Sollmaßabweichung, insbesondere einer Profiltorsion, des Längsprofils oder des Querprofils,
- Verbinden des an das Eckelement angesetzten Längsprofils oder Querprofils mit dem Eckelement,
- Ansetzen des noch nicht mit dem Eckelement verbundenen Querprofils oder Längs-profils an das Eckelement, und
- Verbinden des noch nicht mit dem Eckelement verbundenen Querprofils oder Längsprofils mit dem Eckelement.

Alternativ hierzu können die Verfahrensschritte vorgesehen sein:
- Ansetzen entweder des Längsprofils oder des Querprofils an das Eckelement und Verbinden des an das Eckelement angesetzten Längsprofils oder Querprofils mit dem Eckelement, insbesondere ungeachtet einer etwaig bestehenden und sich auf das Eckelement übertragenden Sollmaßabweichung des Längsprofils oder des Querprofils,
- Spanende Bearbeitung einer noch nicht mit dem Längsprofil oder Querprofil verbundenen Verbindungsfläche des Eckelements unter Ausgleich der zwischen Eckelement und dem mit dem Eckelement bereits verbundenen Längsprofil oder Querprofil bestehenden Sollmaßabweichung, und
- Ansetzen des noch nicht mit dem Eckelement verbundenen Querprofils oder Längsprofils an das Eckelement, und
- Verbinden des noch nicht mit dem Eckelement verbundenen Querprofil oder Längsprofil mit dem Eckelement.

Das Verbinden des Längsprofils und des Querprofils mit dem Eckelement findet bevorzugt über eine Schweißverbindung statt. Das Eckelement dient als Ecküberbrückungsteil und ist bevorzugt ein (Druck-)Gussteil oder aber ein Schmiedeteil und ist weiter bevorzugt aus einer Leichtmetalllegierung, insbesondere einer Aluminiumlegierung und bevorzugt als Vollmaterialbauteil hergestellt. Längsprofil und Querprofil sind bevorzugt Strangpressprofile aus Leichtmetalllegierungen, insbesondere Aluminiumlegierungen. Bevorzugt sind Längsprofil und/oder Querprofil Mehrkammerhohlprofile mit Innenstegen. Selbstverständlich ist es auch möglich, dass Längsprofil und/oder Querprofil und/oder Eckelement aus einem gegebenenfalls faserverstärkten Kunststoffmaterial gefertigt sind. Insbesondere in einem solchen Fall kann auch vorgesehen sein, dass das Fügen der verschiedenen Bauteile durch Kleben erfolgt.

Durch die Verwendung eines die Tragrahmenecke bildenden zusätzlichen Eckelements, das ein von dem Längsprofil und dem Querprofil separates Bauteil ist und mittels dem die Notwendigkeit, Querprofil und Längsprofil direkt miteinander zu verbinden, vermieden ist, können etwaige Maßabweichungen der Trägerprofile vom idealen Sollmaß, insbesondere Verdrehungen bzw. Profiltorsionen, kompensiert und über das Eckelement ausgeglichen werden. Auch sonstige Sollmaßabweichungen wie Abweichungen von der Geradheit, können ausgeglichen werden. Das Eckelement bildet ein Ecküberbrückungsbauteil.

Ein weiterer Vorteil ist, dass die zur Verbindung von Längs- und Querprofil vorzunehmenden Schweißnähte oder Klebungen aus dem unmittelbaren Eckbereich heraus an besser erreichbare Stellen verlagert werden und daher die Schweißungen prozesssicherer mit besserem Ergebnis hinsichtlich Belastbarkeit und Dichtheit realisiert werden können. Es entstehen bei geringerem fertigungstechnischen Schweißaufwand höher belastbare Verbindungsstellen, die außerdem mit einer größeren Sicherheit den an den Batterietragrahmen gestellten Dichtheitsanforderungen genügen. Sowohl die Verbindung des Längsprofils mit dem Eckelement als auch die Verbindung des Querprofils mit dem Eckelement kann von einer umlaufenden in einer Schweißebene befindlichen Schweißnaht gebildet sein.

Um die vorstehend beschriebenen Vorteile besonders gut umsetzen zu können, ist vorgesehen, dass der Innenwinkel, den die Tragrahmenecke aufweist, durch das Eckelement ausgebildet ist. So wird der Innenwinkel von dem Eckelement und nicht unmittelbar durch die Verbindung der beiden Profile gebildet und Längs- und Querprofil stehen beabstandet voneinander nur mit dem Eckelement in Verbindung.

Als vorteilhaft wird angesehen, wenn das Eckelement eine erste Stirnseite mit einer ersten Stirnseitenebene, die einer Stirnseite des Längsträgers zugewandt ist, und eine zur ersten Stirnseitenebene winklig stehende (bevorzugt um 90° winklig stehende) zweite Stirnseite mit einer zweiten Stirnseitenebene, die einer Stirnseite des Querträger zugewandt ist, aufweist. Auf diese Weise kann die Stirnseite des Längsträgers zur Verbindung mit dem Eckelement gegen die erste Stirnseitenebene des Eckelements auf Stoß angesetzt und anschließend mit dem Eckelement verbunden werden und/oder die Stirnseite des Querträgers kann gegen die zweite Stirnseitenebene des Eckelements auf Stoß angesetzt und anschließend hiermit verbunden werden. Die beiden winklig zueinanderstehenden Stirnseiten des Eckelements bilden somit die zur bevorzugt stoffschlüssigen Verbindung von Längsprofil bzw. Querprofil mit dem Eckelement bevorzugt verwendeten Verbindungsflächen und beim fertiggestellten Batterietragrahmen können die Stirnseiten der Profile auf Stoß gegen die Stirnseitenebenen des Eckelements anliegen. Die zur Verbindung vorgesehenen Schweißnähte verbinden also bevorzugt die Längs- und Querprofilstirnseiten mit den Stirnseitenebenen des Eckelements.

Es kann vorgesehen sein, dass an der ersten Stirnseite des Eckelements ein oder mehrere Formschlusszapfen angeordnet sind, die aus der ersten Stirnseitenebene herausragen und stirnseitig in das Längsprofil eindringen und/oder dass an der zweiten Stirnseite des Eckelements ein oder mehrere Formschlusszapfen angeordnet sind, die aus der zweiten Stirnseitenebene herausragen und stirnseitig in das Querprofil eindringen. Hierdurch ist gewährleistet, dass das Eckelement formschlüssig in das Längs- oder Querprofil eindringen kann und so insbesondere im Crashfall neben den das Eckelement und das Längs- bzw. Querprofil verbindenden Schweißnähten durch die Formschlusszapfen außerdem ein quer zur Profillängsrichtung formschlüssig wirkender Lastpfad hergestellt ist, der insbesondere dann wirksam wird, wenn die Schweißnaht versagt oder stark deformiert wird.

Weiter ist vorgesehen, dass das Längsprofil und/oder das Querprofil ein Mehrkammerprofil ist und Innenstege aufweist, die die Innenkammern des Mehrkammerprofils voneinander trennen, und an der ersten Stirnseite des Eckelements und/oder an der zweiten Stirnseite des Eckelements eine Mehrzahl von Formschlusszapfen angeordnet sind, die in unterschiedliche Innenkammern des ihnen zugewandten Längsprofils oder Querprofils eindringen.

Um trotz der Verwendung von Formschlusszapfen eine Toleranzkompensation zu gewährleisten, ist vorgesehen, dass der oder die Formschlusszapfen gegenüber dem Innenmaß des Längsprofils oder des Querprofils oder gegenüber Innenmaßen von über Innenstege getrennten Innenkammern des Längsprofils oder des Querprofils in zumindest einer Richtung, bevorzugt aber in beiden Richtungen quer zur Längserstreckung der Profile, untermaßig sind. Dies ermöglicht es, das Längs- oder das Querprofil trotz des Eingriffs von Formschlusszapfen in das jeweilige Profil gegenüber dem Eckelement zumindest in einem für die Toleranzkompensation erforderlichen Maß zu verdrehen.

Zur weiteren Stabilisierung des Batterietragrahmens kann vorgesehen sein, dass am Eckelement eine die Tragrahmenecke außenseitig umgreifende horizontal verlaufende Verrippung mit wenigstens einer Versteifungsrippe vorgesehen ist, wobei insbesondere vorgesehen sein kann, dass das Längsprofil und/oder das Querprofil ein Mehrkammerprofil ist und Innenstege aufweist, und das Eckelement wenigstens eine die die Tragrahmenecke außenseitig umgreifende Versteifungsrippe aufweist, wobei die wenigstens eine Versteifungsrippe derart zwischen einer Oberseite und einer Unterseite des Eckelements auf der Höhe eines Innenstegs des Längsprofils und/oder des Querprofils angeordnet sein kann, dass die Versteifungsrippe den betreffenden Innensteg des Längsprofils und/oder des Querprofils fortsetzt.

Zur weiteren Toleranzkompensation nach einer bereits erfolgten Verbindung des Eckelements mit dem Längs- oder Querprofil kann vorgesehen sein, dass an der dem Längsprofil oder der dem Querprofil zugewandten Stirnseite des Eckelements eine Bearbeitungszugabe vorgesehen ist. Ist zum Beispiel das Eckelement bereits mit dem Längsprofil verbunden und entspricht die genaue Position und/oder Ausrichtung der Verbindungsfläche, über die das Eckelement mit dem Querprofil verbunden werden soll, nicht der Sollposition bzw. Sollausrichtung der Verbindungsfläche, lässt sich die Verbindungsfläche, die insbesondere von der dem Querprofil zugewandten Stirnflächenebene der zweiten Stirnfläche des Eckelements gebildet ist, durch Materialabtrag an die Sollposition und/oder Sollausrichtung anpassen. Insbesondere kann so eine Schiefstellung der Verbindungsfläche, die dadurch entstehen kann, dass sich eine vom Längsprofil auf das Eckelement übertragene Sollmaßabweichung auch auf die Verbindungsfläche übertragen hat, korrigiert werden.

Um nicht nur eine Dichtheit der Tragrahmenecke an den Verbindungsstellen zwischen Eckelement und Längs- bzw. Querprofil herzustellen, sondern auch eine Dichtheit des Tragrahmens gegenüber einem Bodenblech, kann vorgesehen sein, dass der vom Eckelement, dem Längsprofil und dem Querprofil gebildete Bereich der Tragrahmenecke unterseitig nach dem Verbinden von Längsprofil und Querprofil mit dem Eckelement spanend nachbearbeitet ist. Hierdurch lässt sich insbesondere ein ebenes Bodenblech passgenau mit dem Tragrahmen verbinden. Etwaige verbliebene Schiefstellungen oder Schweißnahtüberstände, die sich bei der Herstellung der Verbindung von Bodenblech und Tragrahmen insbesondere im Bereich der Tragrahmenecke nachteilig auf die Dichtheit und Belastbarkeit auswirken können, werden so sicher beseitigt.

Der vorstehend beschriebene Batterietragrahmen sowie das Verfahren zu dessen Herstellung ermöglichen insbesondere eine Ausgestaltung eines Batterietragrahmens, bei dem das Längsprofil und das Querprofil ein Hohlkammerprofil ist, wobei von einem der beiden Profile die nach außen weisende Profilseite und vom anderen der beiden Profile die nach innen weisende Profilseite die dichtende Profilseite sein kann, während in der jeweils anderen Profilseite Öffnungen oder Bohrungen vorgesehen sein können. Insbesondere besteht kein zusätzlicher Bedarf der Abdichtung der Profilstirnseiten, die durch die Verbindung mit dem Eckelement verschlossen sind.

Weitere Merkmale und Vorteile der Erfindung ergeben sich der nachfolgenden Beschreibung bevorzugter Ausführungsbeispiele anhand der Zeichnungen.

In den Zeichnungen zeigen:
- Fig. 1a/1b: den Eckbereich eines konventionellen Tragrahmens für eine Elektrofahrzeugbatterie in zwei verschiedenen perspektivischen Ansichten,
- Fig. 2a/2b: den Eckbereich eines Tragrahmens für eine Elektrofahrzeugbatterie mit einem in die Tragrahmenecke eingesetzten Eckelement in zwei verschiedenen perspektivischen Ansichten,
- Fig. 3a/3b: ein Eckelement zur Verwendung in einem Tragrahmen für eine Elektrofahrzugbatterie in zwei verschiedenen perspektivischen Ansichten,
- Fig. 4: eine Detailansicht des mit einen Längsprofil und einem Querprofil verbundenen Eckelements aus Figur 3a und Figur 3b,
- Fig. 5a: eine auf eine vom Eckelement gebildete Innenecke gerichtete Ansicht,
- Fig. 5b: eine auf eine vom Eckelement gebildete Innenecke gerichtete Ansicht,
- Fig. 6a/6b: in x-Richtung auf eine Stirnseite des Eckelements gerichtete Ansichten mit verschiedenen gedachten Positionen eines gegen die Stirnseite angesetzten Längsprofils, und
- Fig. 7: eine in y-Richtung weisende Stirnseite des Eckelements unter Andeutung eines Materialabtrags im Bereich einer Bearbeitungszugabe.

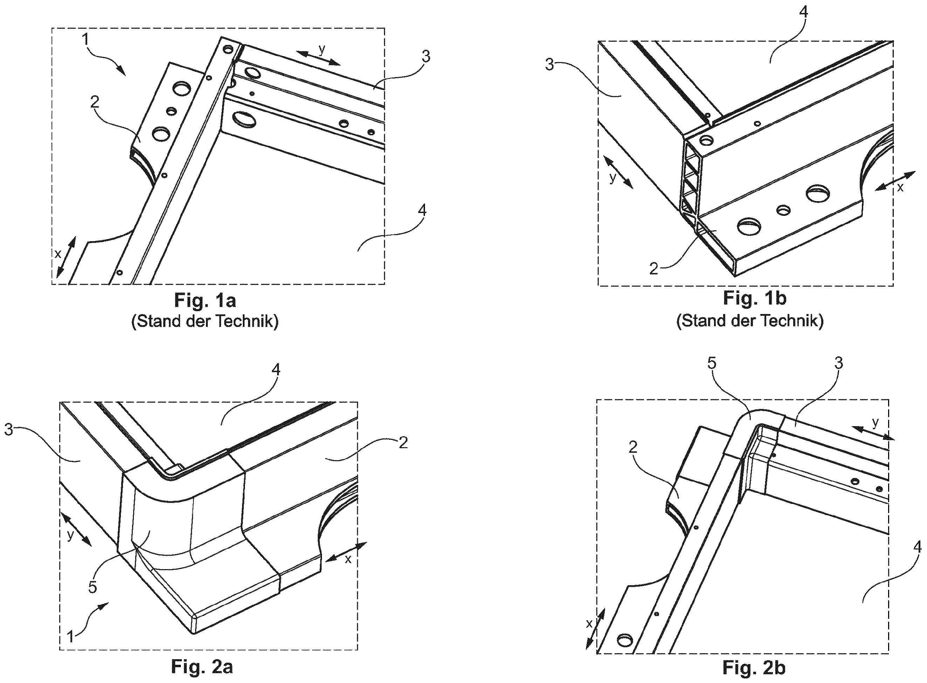

In Figur 1a und Figur 1b ist ein Eckbereich eines konventionellen Batterietragrahmens 1 gezeigt. Ein mit seiner Längserstreckung in x-Richtung (parallel zur Vorwärtsfahrtrichtung bei Geradeausfahrt) ausgerichtetes Längsprofil 2 ist mit einem Querprofil 3 verbunden, dass sich in y-Richtung (Quer zur x-Richtung und parallel zur Fahrbahnfläche) erstreckt. Der in den Figuren nicht vollständig dargestellte Batterietragrahmen 1 weist mindestens zwei oder insgesamt bis zu vier derartig ausgestaltete Ecken auf und ist bevorzugt rechtwinklig ausgebildet. Unterseitig an Längsprofil 2 und Querprofil 3 ist ein Bodenblech 4 an dem Rahmen befestigt.

Längsprofil 2 und Querprofil 3 sind verschweißt. Die in den Figuren nicht explizit gezeigte Schweißnaht verläuft über einen großen Teil ihres Umfangs entlang einer inneren Seitenfläche des Längsprofils 2 und ist bedingt dadurch, dass eine Stirnseite des Querprofils 3 auf Stoß gegen die als Verbindungsfläche dienende Seitenfläche des Längsprofils angesetzt ist, als Kehlnaht ausgeführt. Die Schweißnaht verläuft entlang der unmittelbar am Stoß zwischen Querprofil und Längsprofil entstehenden Innenecke.

Bei dieser Konstruktion führt eine nicht hinreichende Maßhaltigkeit des Längsprofils 2 und/oder des Querprofils 3 dazu, dass sich im Bereich der auch die Innenecke des Rahmens bildenden Verbindungsstelle ungleichmäßige Spalte ausbilden, die nicht ohne weiteres korrigierbar sind, sondern letztlich durch die Schweißnaht überbrückt werden müssen. Insbesondere kann das Längsprofil durch eine Längsprofiltorsion in sich verdreht sein. Derartige Spalte führen wiederum zu einer deutlich gesteigerten Gefahr von unzureichend festen und dichten Schweißnähten und erschweren die prozesssichere automatisierte Schweißung.

Weiter zeigt die Konstruktion, dass die zur Dichtheit des Batterietragrahmens erforderliche Fläche einerseits die nach innen weisende Fläche des Längsprofils 2 und die nach außen weisende Fläche des Querprofils 3 sein muss, da das Längsprofil 2 ein stirnseitig offenes Mehrkammerhohlprofil ist und eine Öffnung in der Innenseite des Längsprofils notgedrungen eine Undichtigkeit nach sich ziehen würde. Ähnliches gilt für das Querprofil, in dessen nach innen weisenden Flächen Öffnungen vorgesehen sind, aufgrund derer eine weitere Öffnung in der nach außen weisenden Fläche auch zu einer Undichtigkeit des Batterietragrahmens führen würde. Eine wahlweise Verschiebung der Dichtebenen auf eine Innen- oder Außenfläche der verwendeten Profile lässt diese Konstruktion nicht ohne weiteres zu.

Um für die vorstehend beschriebenen Problemen Abhilfe zu schaffen, sieht der Batterietragrahmen 1 nach Figur 2a und 2b zwischen Längsprofil 2 und Querprofil 3 ein die Tragrahmenecke überbrückendes Eckelement 5 vor. Die nach Figur 1a und Figur 1b noch mittels einer einzigen umlaufenden Schweißnaht verbundenen Profile 2, 3 können nun mittels zwei voneinander getrennten Schweißnähten verbunden werden. Die beiden umlaufenden Schweißnähte sind nun entfernt von der Innenecke, die von dem Eckelement 5 selbst abgebildet wird, in zwei winklig zueinanderstehenden Schweißebenen angeordnet und so insbesondere für automatisierte Schweißverfahren besser erreichbar und die Schweißungen sind prozesssicherer durchzuführen. Die Gewähr dafür, dass die Schweißungen hinreichend belastbar und dicht sind, ist erhöht.

Da durch das Eckelement die offenen Stirnseiten von sowohl Längsprofil als auch Querprofil dicht verschlossen sind, können die Systemgrenzen der den Batterietragrahmen insgesamt umlaufend abdichtenden Ebenen durch den Konstrukteur freier gewählt werden.

Auch bei dem in Figur 2a und Figur 2b gezeigten Batterietragrahmen 1 ist ein Bodenblech 4 mit dem Tragrahmen verbunden.

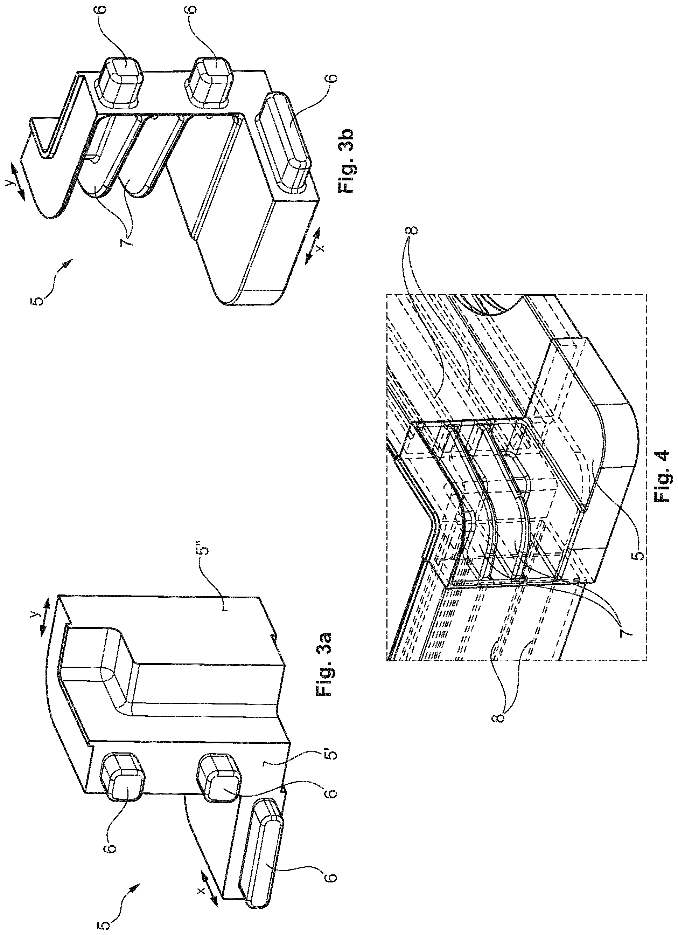

Figur 3a und Figur 3b zeigen eine weitere Ausführungsform eines für die Herstellung eines Batterietragrahmens verwendeten Eckelements 4. Das Eckelement 4, das bevorzugt ein Guss- oder Schmiedeteil aus einer Leichtmetalllegierung ist, definiert mit seiner in x-Richtung weisenden Stirnseite eine Stirnflächenebene 5', aus der drei Formschlusszapfen 6 in x-Richtung hervorstehen, die nach der Verbindung des Eckelements 5 mit dem Längsprofil 2 in das Längsprofil hineinragen. Durch diese Formschlusszapfen 6 können beispielsweise bei einer unfallbedingten Deformation der Schweißnaht die Formschlusszapfen eine in y-Richtung wirkende Last, wie sie für einen Seitenaufprall typisch ist, abstützen und ein Versagen der Schweißung quer zur x-Richtung verhindern, indem sie innenseitig im Längsprofil mit dessen Seitenwandungen abstützend in Anlage geraten.

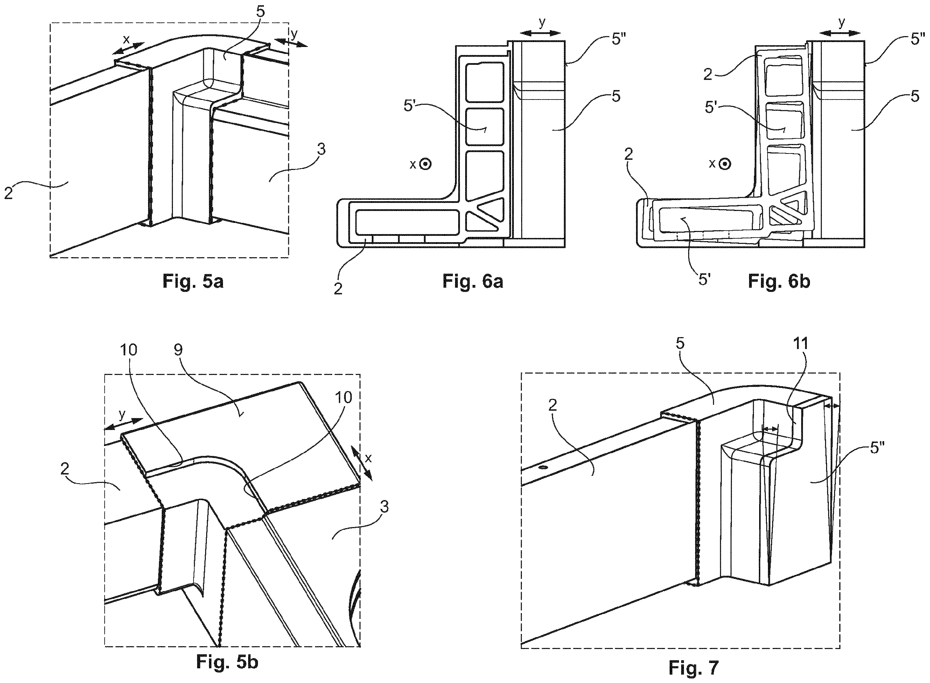

Die Stirnflächenebene 5' bildet außerdem die Verbindungsfläche, über die das Längsprofil 2 mit dem Eckelement 5 stoffschlüssig verbunden wird, wie auch aus Figuren 5a und 5b ersichtlich, in denen die Schweißnähte durch gestrichelte Linien anschaulich angedeutet sind.

In ähnlicher Weise wie das Längsprofil 2 wird auch das Querprofil 3 mit dem Eckelement 5 verbunden, wobei die in y-Richtung weisenden Stirnfläche des Eckelements eine Stirnflächenebene 5" definiert, die bei dem in den Figuren gezeigten Ausführungsbeispiel keine Formschlusszapfen aufweist, sondern eben ausgebildet ist. Gleichwohl können auch an dieser in y-Richtung weisenden Stirnfläche Formschlusszapfen vorgesehen sein. Wie die Stirnflächenebene 5' dient auch die Stirnflächenebene 5"als Verbindungsfläche zwischen dem Eckelement und dem an diese Stirnflächenebene angesetzten Querprofil.

Figur 4 verdeutlicht, dass außenseitig am Eckelement 4 mehrere Versteifungsrippen 7 vorgesehen sind, die das Eckelement und damit die Tragrahmenecke außenseitig umgreifen. Die Versteifungsrippen 7 sind, wie aus der gestrichelten Darstellung von innerhalb des Längsprofils 2 und des Querprofils 3 angeordneten Innenstegen 8 ersichtlich, von ihrer Höhe her so zwischen der Eckelementoberseite und der E-ckelementunterseite positioniert, dass sie die Innenstege von Längsprofil und Querprofil fortführen. Hierdurch wird eine besonders effektive Lasteinleitung von den Profilen in das Eckelement und umgekehrt erreicht.

Figur 5a verdeutlicht anschaulich die Schweißnahtführung zur Verbindung von Längsprofil 2 und Querprofil 3 mit dem Eckelement 5. Die Schweißnähte sind gegenüber der unmittelbaren Innenecke des Batterietragrahmens ein Stück von der Ecke Weg nach innen (y-Richtung) bzw. nach vorne oder hinten (x-Richtung) verlagert und die Verbindung wird über zwei umlaufende Schweißnähte erreicht, die beide innerhalb einer Schweißebene liegen. Die Schweißebene der das Längsprofil 2 mit dem Eckelement verbindenden Schweißnaht steht dabei winklig (bevorzugt 90°) zu der Schweißebene der das Querprofil mit dem Eckelement verbindenden Schweißnaht.

Figur 5b zeigt die Tragrahmenecke in einer perspektivischen Ansicht von unten. Die Tragrahmenecke kann in der bei bestimmungsgemäßer Verwendung nach unten weisenden Fläche 9 eine um die vom Eckelement gebildete Innenecke herumgeführte Einpassstufe 10 aufweisen, die an den Kantenverlauf des mit der Unterseite 9 des Eckelements 5 zu verbindenden, insbesondere zu verschweißenden, Bodenblechs 4 angepasst ist (siehe auch Bodenblech 4 in Figur 2a und Figur 2b) und so eine positionsgenaue Einpassung des Bodenblechs an der Unterseite des Tragrahmens 1 ermöglicht. Weiter kann die in Figur 5b ersichtliche Unterseite 9 der Tragrahmenecke nach erfolgter Verbindung des Eckelements mit dem Längsprofil und dem Querprofil spanend nachbearbeitet werden, um etwaige Unebenheiten wie Schweißwülste zu entfernen oder Schiefstellungen, die aus Maßungenauigkeiten resultieren, zu korrigieren. Die Einpassstufe 10 kann insbesondere auch im Rahmen einer derartigen Nachbearbeitung der Tragrahmeneckenunterseite durchgeführt werden.

Figur 6a verdeutlicht durch einen auf die Stirnflächenebene 5' projizierten Querschnitt des Längsprofils 2 die ideale, bei vollkommener Maßhaltigkeit des Längsprofils entstehende Sollanlage des Längsprofils an dem Eckelement. Figur 6b hingegen verdeutlicht zwei in der Praxis oft anzutreffende Istanlagen des Längsprofils gegen das Eckelement in überspitzter Darstellung, die sich durch eine oft nicht zu vermeidende Profiltorsion des Längsprofil ergeben.

Um zu vermeiden, dass diese Längsprofiltorsion sich über das Eckelement auf das Querprofil überträgt, wenn erst Längsprofil und Eckelement miteinander verbunden werden und dann das Querprofil mit dem Eckelement verbunden wird, ist es möglich, entweder das Eckelement so vorauszurichten, dass die zur Verbindung mit dem Querprofil bestimmte Verbindungsfläche der Sollausrichtung entsprechend ausgerichtet ist und das Längsprofil auch in einer nicht der Sollanlage entsprechenden Istanlage mit dem Eckelement zu verbinden. Oder es kann vorgesehen sein, dass das Längsprofil trotz einer vorhandenen Längsprofiltorsion stets in der in Figur 6a gezeigten Sollanlage an das Eckelement angesetzt und mit diesem verbunden wird, wobei sich dann die Verdrehung des Längsprofils über das Eckelement auf das Querprofil übertragen würde, wenn das Eckelement nicht an der Verbindungsfläche 5", die zur Verbindung mit dem Querprofil vorgesehen ist, in einer Weise korrigierend nachbearbeitet werden würde, die die nicht der Sollausrichtung entsprechende Fehlstellung dieser Verbindungsfläche beseitigt. Hierzu kann am Eckelement eine aus Figur 7 ersichtliche Bearbeitungszugabe 11 vorgesehen sein, mittels der eine zur nachträglichen Korrektur einer nicht der Sollausrichtung entsprechenden Ausrichtung der Verbindungsfläche 5" dienende Materialzugabe geschaffen ist. Es erfolgt eine Kalibrierung der Verbindungsflächenausrichtung durch einen der Verbindung des Eckelements mit dem Längsprofil nachgelagerten Beschnitt der Verbindungsfläche, die zur Verbindung mit dem Querprofil vorgesehen ist.

Figur 6b verdeutlicht ferner in Zusammenschau mit den in Figur 3b gezeigten Formschlusszapfen, dass die Formschlusszapfen insbesondere in dem Fall, dass das Längsprofil nicht zwingend in der in Figur 6a gezeigten Anlage gegen die Stirnflächenebene 5' angesetzt werden soll, gegenüber dem Innenmaß des Profils oder den Innenmaßen von Innenkammern des Mehrkammerprofils untermaßig sein sollten, um die in Figur 6b gezeigte Verdrehung des Profils gegenüber dem Eckelement zulassen zu können.

Soweit vorstehend die Herstellung des Batterietragrahmens in Bezug auf eine Längsprofiltorsion sowie dahingehend beschrieben worden ist, dass zunächst das Längsprofil mit dem Eckelement verbunden wird und erst dann das Querprofil mit dem Eckelement verbunden wird, sei angemerkt, dass eine Profiltorsion selbstverständlich genauso im Querprofil vorliegen kann und dass auch zunächst das Querprofil mit dem Eckelement verbunden werden kann und die vorstehend beschriebenen Schritte des Toleranzausgleichs auch mit Blick auf das Längsprofil vorgenommen werden können.

### Bezugszeichenliste

- 1: Batterietragrahmen
- 2: Längsprofil
- 3: Querprofil
- 4: Bodenblech
- 5: Eckelement
- 5': in x-Richtung weisende Stirnflächenebene des Eckelements
- 5": in y-Richtung weisende Stirnflächenebene des Eckelements
- 6: Formschlusszapfen
- 7: Versteifungsrippen
- 8: Innenstege
- 9: nach unten weisende Fläche des Eckelements
- 10: Einpassstufe
- 11: Bearbeitungszugabe

## Patentansprüche

1. Batterietragrahmen (1) für ein Elektrofahrzeug mit einem Längsprofil (2) und mit einem Querprofil (3), wobei der Tragrahmen (1) wenigstens eine einen Innenwinkel bildende Tragrahmenecke aufweist, wobei zwischen Längsprofil (2) und Querprofil (3) als Toleranzkompensation ein Eckelement (5) angeordnet ist, über das Längsprofil (2) und Querprofil (3) miteinander verbunden sind,
**dadurch gekennzeichnet, dass** entweder
- das Längsprofil (2) oder das Querprofil (3) in einer nicht der Sollanlage entsprechenden Istanlage mit dem Eckelement (5) verbunden ist, wobei die zur Verbindung des Eckelements (5) mit dem jeweils anderen Profil bestimmte Verbindungsfläche des Eckelements (5) der Sollausrichtung entsprechend ausgerichtet ist,
oder dass
- das Längsprofil (2) oder das Querprofil (3) in der Sollanlage mit dem Eckelement verbunden ist, wobei die zur Verbindung des Eckelements (5) mit dem jeweils anderen Profil vorgesehene Verbindungsfläche unter Beseitigung einer Fehlstellung dieser Verbindungsfläche nachbearbeitet ist.

2. Batterietragrahmen nach Anspruch 1, **dadurch gekennzeichnet, dass** die Tragrahmenecke einen Innenwinkel aufweist und der Innenwinkel durch das Eckelement (5) ausgebildet ist.

3. Batterietragrahmen nach einem der vorhergehenden Ansprüche, **dadurch gekennzeichnet, dass** das Eckelement (5) eine erste Stirnseite mit einer ersten Stirnseitenebene (5'), die einer Stirnseite des Längsträgers (2) zugewandt ist, und eine zur ersten Stirnseitenebene (5') winklig stehende zweite Stirnseite mit einer zweiten Stirnseitenebene (5"), die einer Stirnseite des Querträgers (3) zugewandt ist, aufweist.

4. Batterietragrahmen nach einem der vorhergehenden Ansprüche, **dadurch gekennzeichnet, dass** die Stirnseite des Längsträgers (2) gegen die erste Stirnseitenebene (5') des Eckelements (5) angesetzt ist und/oder die Stirnseite des Querträgers (3) gegen die zweite Stirnseitenebene (5") des Eckelements (5) anliegt.

5. Batterietragrahmen nach einem der vorhergehenden Ansprüche, **dadurch gekennzeichnet, dass** an einer ersten Stirnseite des Eckelements (5) ein oder mehrere Formschlusszapfen (6) angeordnet sind, die aus einer ersten Stirnseitenebene (5') herausragen und stirnseitig in das Längsprofil (2) eindringen und/oder an einer zweiten Stirnseite des Eckelements (5) ein oder mehrere Formschlusszapfen (6) angeordnet sind, die aus der zweiten Stirnseitenebene (5") herausragen und stirnseitig in das Querprofil (3) eindringen.

6. Batterietragrahmen nach einem der vorhergehenden Ansprüche, **dadurch gekennzeichnet, dass** das Längsprofil (2) und/oder das Querprofil (3) ein Mehrkammerprofil ist und Innenstege (8) aufweist, die Innenkammern des Mehrkammerprofils voneinander trennen, und an der ersten Stirnseite des Eckelements (5) und/oder an der zweiten Stirnseite des Eckelements (5) eine Mehrzahl von Formschlusszapfen (6) angeordnet sind, die in unterschiedliche Innenkammern des ihnen zugewandten Längsprofils (2) oder Querprofils (3) eindringen.

7. Batterietragrahmen nach einem der vorhergehenden Ansprüche, **dadurch gekennzeichnet, dass** der oder die Formschlusszapfen (6) gegenüber dem Innenmaß des Längsprofils (2) oder des Querprofils (3) oder gegenüber Innenmaßen von über Innenstege (8) getrennten Innenkammern des Längsprofils (2) oder des Querprofils (3) in zumindest einer Richtung, bevorzugt wenigstens in Fahrzeugquerrichtung (y-Richtung), untermaßig sind.

8. Batterietragrahmen nach einem der vorhergehenden Ansprüche, **dadurch gekennzeichnet, dass** am Eckelement (5) außenseitig eine die Tragrahmenecke umgreifende Verrippung mit wenigstens einer Versteifungsrippe (7) vorgesehen ist.

9. Batterietragrahmen nach einem der vorhergehenden Ansprüche, **dadurch gekennzeichnet, dass** das Längsprofil (2) und/oder das Querprofil (3) ein Mehrkammerprofil ist und Innenstege (8) aufweist, und das Eckelement (5) außenseitig wenigstens eine die die Tragrahmenecke außenseitig umgreifende Versteifungsrippe (7) aufweist, wobei die wenigstens eine Versteifungsrippe (7) derart zwischen einer Oberseite und einer Unterseite des Eckelements (5) auf der Höhe eines Innenstegs (8) des Längsprofils (2) und/oder des Querprofils (3) angeordnet ist, dass die Versteifungsrippe (7) den betreffenden Innensteg (8) des Längsprofils (2) und/oder des Querprofils (3) fortsetzt.

10. Batterietragrahmen nach einem der vorhergehenden Ansprüche, **dadurch gekennzeichnet, dass** an der dem Längsprofil (2) oder der dem Querprofil (3) zugewandten Stirnseite des Eckelements (5) eine Bearbeitungszugabe (11) vorgesehen ist.

11. Batterietragrahmen nach einem der vorhergehenden Ansprüche, **dadurch gekennzeichnet, dass** der vom Eckelement (5), dem Längsprofil (2) und dem Querprofil (3) gebildete Bereich der wenigstens einen Tragrahmenecke unterseitig nach dem Verbinden von Längsprofil (2) und Querprofil (3) mit dem Eckelement (5) spanend nachbearbeitet ist.

12. Batterietragrahmen nach einem der vorhergehenden Ansprüche, **dadurch gekennzeichnet, dass** das Längsprofil (2) und das Querprofil (3) ein Hohlkammerprofil ist, wobei von einem der beiden Profile die nach außen weisende Profilseite und vom anderen der beiden Profile die nach innen weisende Profilseite die den Tragrahmen (1) nach außen dichtende Profilseite ist.

13. Verfahren zur Herstellung eines Batterietragrahmens (1) nach einem der vorhergehenden Ansprüche, **gekennzeichnet durch die Verfahrensschritte**
- Ansetzen entweder des Längsprofils (2) oder des Querprofils (3) an das lagegerecht vorausgerichtete Eckelement (5) unter Ausgleich einer in Relation zum Eckelement (5) bestehenden Sollmaßabweichung des Längsprofils (2) oder des Querprofils (3),
- Verbinden des an das Eckelement (5) angesetzten Längsprofils (2) oder Querprofils (3) mit dem Eckelement (5),
- Ansetzen des noch nicht mit dem Eckelement (5) verbundenen Querprofils (3) oder Längsprofils (2) an das Eckelement (5), und
- Verbinden des noch nicht mit dem Eckelement (5) verbundenen Querprofils (3) oder Längsprofils (2) mit dem Eckelement (5).

14. Verfahren zur Herstellung eines Batterietragrahmens (1) nach einem der vorhergehenden Ansprüche, **gekennzeichnet durch die Verfahrensschritte**
- Ansetzen entweder des Längsprofils (2) oder des Querprofils (3) an das Eckelement (5) und Verbinden des an das Eckelement (5) angesetzten Längsprofils (2) oder Querprofils (3) mit dem Eckelement,
- Spanende Bearbeitung einer noch nicht mit dem Längsprofil (2) oder Querprofil (3) verbundenen Verbindungsfläche unter Ausgleich einer zwischen Eckelement (5) und dem mit dem Eckelement (5) bereits verbundenen Längsprofil (2) oder Querprofil (3) bestehenden Sollmaßabweichung der Verbindungsfläche, und
- Ansetzen des noch nicht mit dem Eckelement (5) verbundenen Querprofils (3) oder Längsprofils (2) an das Eckelement (5), und
- Verbinden des noch nicht mit dem Eckelement (5) verbundenen Querprofils (3) oder Längsprofils (2) mit dem Eckelement (5).

## Claims

1. Battery support frame (1) for an electrical vehicle with a longitudinal profile (2) and with a transverse profile (3), wherein the support frame (1) has at least one support frame corner forming an inside angle, wherein, between longitudinal profile (2) and transverse profile (3), a corner element (5) is arranged to compensate for tolerances, by which corner element the longitudinal profile (2) and the transverse profile (3) are connected together, **characterised in that** either
- the longitudinal profile (2) or the transverse profile (3) is connected by the corner element (5) in an actual arrangement not corresponding to the target arrangement, wherein the connecting face of the corner element (5) intended to connect the corner element (5) to the respectively other profile of the target direction is aligned correspondingly,
or that
- the longitudinal profile (2) or the transverse profile (3) is connected to the corner element in the target arrangement wherein the connecting face provided to connect the corner element (5) to the respectively other profile is reworked by removing the misalignment of this connecting face.

2. Battery support frame according to claim 1, **characterised in that** the corner of the support frame has an inside angle and the inside angle is formed by the corner element (5).

3. Battery support frame according to any one of the preceding claims, **characterised in that** the corner element (5) has a first front side with a first front side plane (5'), which is turned towards a front side of the longitudinal member (2), and a second front side at an angle to the first front side plane (5') with a second front side plane (5") turned towards a front side of the transverse member (3).

4. Battery support frame according to any one of the preceding claims, **characterised in that** the front side of the longitudinal member (2) is placed against the first front side plane (5') of the corner element (5) and/or the front side of the transverse member (3) fits closely against the second front side plane (5") of the corner element (5).

5. Battery support frame according to any one of the preceding claims, **characterised in that** one or more form fit pins (6) is/are arranged on a first front side of the corner element (5), wherein said pin(s) project(s) from a first front side plane (5') and penetrate, on its front side, into the longitudinal profile (2) and/or one or more form fit pins (6) is/are arranged on a second front side of the corner element (5), wherein said pin(s) project(s) from the second front side plane (5") and penetrate(s), on its front side, into the transverse profile (3).

6. Battery support frame according to any one of the preceding claims, **characterised in that** the longitudinal profile (2) and/or the transverse profile (3) is a multi-chamber profile and has inner webs (8) which separate the internal chambers of the multi-chamber profile from each other, and a plurality of form fit pins (6) is arranged on the first front side of the corner element (5) and/or on the second front side of the corner element (5), wherein said pins penetrate into different internal chambers of the longitudinal profile (2) or transverse profile (3) turned towards them.

7. Battery support frame according to any one of the preceding claims, **characterised in that** the form fit pins (6) are undersized relative to the internal dimension of the longitudinal profile (2) or of the transverse profile (3) or relative to internal dimensions of internal chambers, separated by internal webs (8), of the longitudinal profile (2) or of the transverse profile (3) in at least one direction, preferably at least transverse to the direction of travel of the vehicle (y-direction).

8. Battery support frame according to any one of the preceding claims, **characterised in that** ribs with at least one stiffening rib (7) are provided on the exterior on the corner element (5) encompassing the corner of the support frame.

9. Battery support frame according to any one of the preceding claims, **characterised in that** the longitudinal profile (2) and/or the transverse profile (3) is/are a multi-chamber profile and has/have internal webs (8), and the corner element (5) has at least one stiffening rib (7) encompassing the corner of the support frame on the outside, wherein the at least one stiffening rib (7) is arranged such that the stiffening rib (7) continues the corresponding internal web (8) of the longitudinal profile (2) and/or of the transverse profile (3) between an upper side and a lower side of the corner element (5) level with an internal web (8) of the longitudinal profile (2) and/or of the transverse profile (3).

10. Battery support frame according to any one of the preceding claims, **characterised in that** a machining allowance (11) is provided on the front side of the corner element (5) facing towards the longitudinal profile (2) or the transverse profile (3).

11. Battery support frame according to any one of the preceding claims, **characterised in that** the area of the at least one support corner formed by the corner element (5), the longitudinal profile (2) and the transverse profile (3) is reworked by machining underneath after connecting the longitudinal profile (2) and transverse profile (3) to the corner element (5).

12. Battery support frame according to any one of the preceding claims, **characterised in that** the longitudinal profile (2) and the transverse profile (3) is a hollow chamber profile, wherein the profile side pointing outwards from one of the two profiles and the profile side pointing inwards from the other of the two profiles is the profile side sealing the support frame (1) from the outside.

13. Method to produce a battery support frame (1) according to any one of the preceding claims, **characterised by the method steps**
- Attachment of either the longitudinal profile (2) or the transverse profile (3) to the correctly prepositioned corner element (5) compensating for a nominal dimensional deviation of the longitudinal profile (2) or of the transverse profile (3) relative to the corner element (5),
- Connection of the longitudinal profile (2) or transverse profile (3) attached to the corner element (5) to the corner element (5),
- Attachment of the transverse profile (3) or longitudinal profile (2), still not connected to the corner element (5), to the corner element (5), and
- Connection of the transverse profile (3) or longitudinal profile (2), still not connected to the corner element (5), to the corner element (5).

14. Method to produce a battery support frame (1) according to any one of the preceding claims, **characterised by the method steps**
- Attachment of either the longitudinal profile (2) or the transverse profile (3) to the corner element (5) and connection of the longitudinal profile (2) or transverse profile (3) attached to the corner element (5) with the corner element,
- Machining of a connecting surface not yet attached to the longitudinal profile (2) or transverse profile (3) compensating for a nominal dimensional deviation of the connecting surface existing between corner element (5) and the longitudinal profile (2) or transverse profile (3) already connected to the corner element (5), and
- Attachment of the transverse profile (3) or longitudinal profile (2), not yet connected to the corner element (5), to the corner element (5), and
- Connection of the transverse profile (3) or longitudinal profile (2), not yet connected to the corner element (5), to the corner element (5).

## Revendications

1. Cadre du support (1) pour une batterie pour un véhicule électrique avec un profilé longitudinal (2) et avec un profilé transversal (3), le cadre du support (1) présentant au moins un angle du cadre du support formant un angle intérieur, un élément d'angle (5) étant disposé entre le profil longitudinal (2) et le profilé transversal (3) en tant que compensation des tolérances reliant entre eux le profil longitudinal (2) et le profilé transversal (3),
**caractérisé** soit **en ce que**
- le profilé longitudinal (2) ou le profilé transversal (3) est relié à l'élément d'angle (5) dans une position réelle ne correspondant pas à la position de consigne, la surface de liaison de l'élément d'angle (5) destinée à relier l'élément d'angle (5) à l'autre profilé respectif étant orientée conformément à l'orientation de consigne,
soit en ce que
- le profilé longitudinal (2) ou le profilé transversal (3) est relié à l'élément d'angle dans la position de consigne, la surface de liaison prévue pour relier l'élément d'angle (5) à l'autre profilé respectif étant rectifiée afin d'éliminer un désalignement de cette surface de liaison.

2. Cadre du support pour une batterie selon la revendication 1, **caractérisé en ce que** l'angle du cadre du support présente un angle intérieur formé par l'élément d'angle (5).

3. Cadre du support pour une batterie selon l'une des revendications précédentes, **caractérisé en ce que** l'élément d'angle (5) présente une première face frontale avec un premier plan de face frontale (5') tournée vers une face frontale du support longitudinal (2) et une deuxième face frontale avec un deuxième plan de face frontale (5") formant l'angle avec le premier plan de face frontale (5') tournée vers une face frontale du support transversal (3).

4. Cadre du support pour une batterie selon l'une des revendications précédentes, **caractérisé en ce que** la face frontale du support longitudinal (2) est positionnée contre le premier plan de face frontale (5') de l'élément d'angle (5) et / ou la face frontale du support transversal (3) est posée contre le deuxième plan de face frontale (5") de l'élément d'angle (5).

5. Cadre du support pour une batterie selon l'une des revendications précédentes, **caractérisé en ce qu'**un ou plusieurs tenons par complémentarité de formes (6) sont disposés sur une première face frontale de l'élément d'angle (5) dépassant d'un premier plan de face frontale (5') et pénétrant par l'avant dans le profilé longitudinal (2) et / ou qu'un ou plusieurs tenons par complémentarité de formes (6) sont disposés sur une deuxième face frontale de l'élément d'angle (5) dépassant du deuxième plan de face frontale (5") et pénétrant par l'avant dans le profilé transversal (3).

6. Cadre du support pour une batterie selon l'une des revendications précédentes, **caractérisé en ce que** le profilé longitudinal (2) et / ou le profilé transversal (3) est un profilé à plusieurs chambres présentant des barres intérieures (8) qui séparent chambres intérieures du profilé à plusieurs chambres et qu'une pluralité de tenons par complémentarités de formes (6) est disposée sur la première face frontale de l'élément d'angle (5) et / ou sur la deuxième face de l'élément d'angle (5) qui pénètrent dans différentes chambres intérieures du profilé longitudinal (2) ou du profilé transversal (3) tourné vers elles.

7. Cadre du support pour une batterie selon l'une des revendications précédentes, **caractérisé en ce que** le ou les tenons par complémentarité de formes (6) ont des dimensions inférieures aux dimensions intérieures du profilé longitudinal (2) ou du profilé transversal (3) ou aux dimensions intérieures des chambres intérieures du profilé longitudinal (2) ou du profilé transversal (3) séparées par les barres intérieures (8) au moins dans une direction, de préférence au moins dans la direction transversale du véhicule (direction y).

8. Cadre du support pour une batterie selon l'une des revendications précédentes, **caractérisé en ce qu'**un nervurage entourant l'angle du cadre du support avec au moins une nervure raidisseuse (7) est prévu sur le côté extérieur de l'élément d'angle (5).

9. Cadre du support pour une batterie selon l'une des revendications précédentes, **caractérisé en ce que** le profilé longitudinal (2) et / ou le profilé transversal (3) est un profilé à plusieurs chambres présentant des barres intérieures (8) et que l'élément d'angle (5) présente sur son côté extérieur au moins une nervure raidisseuse (7) entourant le côté extérieur de l'angle du cadre du support, l'au moins une nervure raidisseuse (7) étant disposée entre un côté supérieur et un côté inférieur de l'élément d'angle (5) à la hauteur d'une barre intérieure (8) du profilé longitudinal (2) et /ou du profilé transversal (3) de telle sorte que la nervure raidisseuse (7) prolonge la barre intérieure (8) concernée du profilé longitudinal (2) et / ou du profilé transversal (3).

10. Cadre du support pour une batterie selon l'une des revendications précédentes, **caractérisé en ce qu'**une surépaisseur d'usinage (11) est prévue sur la face frontale de l'élément d'angle (5) tournée vers le profilé longitudinal (2) ou le profilé transversal (3).

11. Cadre du support pour une batterie selon l'une des revendications précédentes, **caractérisé en ce que** la zone formée par l'élément d'angle (5), le profilé longitudinal (2) et le profilé transversal (3) de l'au moins un angle du support du cadre est usinée par enlèvement de copeaux sur le côté inférieur après la liaison du profilé longitudinal (2) et du profilé transversal (3) avec l'élément d'angle (5).

12. Cadre du support pour une batterie selon l'une des revendications précédentes, **caractérisé en ce que** le profilé longitudinal (2) et le profilé transversal (3) sont des profilés à chambres creuses, la face de l'un des deux profilés tournée vers l'extérieur et la face de l'autre des deux profilés tournée vers l'intérieur sont les faces de profilés isolant le cadre du support (1) vers l'extérieur.

13. Procédé de fabrication d'un cadre du support (1) pour une batterie selon l'une des revendications précédentes, **caractérisé par les étapes du procédé**
- pose soit du profilé longitudinal (2), soit du profilé transversal (3) sur l'élément d'angle (5) préaligné en position exacte en compensant un écart dimensionnel de consigne du profilé longitudinal (2) ou du profilé transversal (3) par rapport à l'élément d'angle (5),
- liaison du profilé longitudinal (2) ou du profilé transversal (3) posé sur l'élément d'angle (5) avec l'élément d'angle (5),
- pose du profilé transversal (3) ou du profilé longitudinal (2) pas encore relié à l'élément d'angle (5) sur l'élément d'angle (5), et
- liaison du profilé transversal (3) ou du profilé longitudinal (2) pas encore relié à l'élément d'angle (5) avec l'élément d'angle (5).

14. Procédé de fabrication d'un cadre du support (1) pour une batterie selon l'une des revendications précédentes, **caractérisé par les étapes du procédé**
- pose soit du profilé longitudinal (2), soit du profilé transversal (3) sur l'élément d'angle (5) et liaison du profilé longitudinal (2) ou du profilé transversal (3) posé sur l'élément d'angle (5) avec l'élément d'angle,
- usinage par enlèvement des copeaux d'une surface de liaison pas encore reliée au profilé longitudinal (2) ou au profilé transversal (3) en compensant un écart dimensionnel de consigne de la surface de liaison entre l'élément d'angle (5) et le profilé longitudinal (2) ou le profilé transversal (3) déjà relié à l'élément d'angle (5), et
- pose du profilé transversal (3) ou du profilé longitudinal (2) pas encore relié à l'élément d'angle (5) sur l'élément d'angle (5), et
- liaison du profilé transversal (3) ou du profilé longitudinal (2) pas encore relié à l'élément d'angle (5) avec l'élément d'angle (5).
